# EUROPEAN PATENT APPLICATION

(11) **EP 4 332 151 A1**
(43) Date of publication of application: **06.03.2024**
(21) Application number: 22193301.3
(22) Date of filing: 31.08.2022
(51) Int. Cl.: C08J 5/04, C08L 29/04, D21C 9/00, D21H 11/20, B29C 45/00

(54) **CELLULOSE FIBRE REINFORCED POLYVINYL ALCOHOL COMPOSITE MATERIALS**

(71) Applicant: Aquapak IP Limited, Birmingham B31 5HE (GB)
(72) Inventor: WILLIAMS, John, Chirbury, Shropshire SY15 6UD (GB); GRIFFITHS, Sian, Glan Conwy, Conwy, LL28 5LU (GB); ASHWORTH, Robert, Colwyn Bay, Conwy, LL28 5YX (GB)
(74) Representative: Hepworth Browne

(57) **Abstract**

A composite material comprising a reaction product of homopolymeric polyvinyl alcohol and a fibrous cellulosic material;
wherein the amount of cellulosic material is in the range from about 0.1 wt% to about 50 wt% of the total weight of the composition. The composite material of this invention may be isotropic.

## Description

This invention relates to composite materials comprising polyvinyl alcohol and cellulose-based fibres, the manufacture of the composites and products comprising or including the composites.

Polyvinyl alcohol is commonly made by hydrolysis of polyvinyl acetate. The degree of hydrolysis affects the properties of the polymer. Polyvinyl alcohol having a low degree (LD) of hydrolysis, below 84%, is widely used in industry. Vinyl acetate copolymers, for example, with ethyl acetate have been used to make vinyl alcohol co-polymers which are easier to process. However, these co-polymers lack the advantageous physical properties of homopolymer polyvinyl alcohol, particularly highly hydrolysed polyvinyl alcohol homopolymer. The present invention relates particularly to polyvinyl alcohol made by hydrolysis of homopolymeric polyvinyl acetate.

Highly hydrolysed polyvinyl acetate, that is with a degree of hydrolysis greater than 98%, is a polymer which essentially comprises homo-polyvinyl alcohol. This polymer, similar to many carbohydrates, decomposes before its melting point of about 250°C is reached. This makes melt processing difficult and for this reason the highly hydrolysed polymer is generally processed as an aqueous solution. Partially hydrolysed polyvinyl acetate is readily melt processed. For example, 80% hydrolysed polyvinyl acetate, can be readily extruded or converted into film by blow molding.

The significant difference between highly hydrolysed (high degree of hydrolysis, HD) and partially hydrolysed (low degree of hydrolysis, LD) polyvinyl alcohols is the extent and quality of the crystalline order due to the differences in the chain structures. Polyvinyl alcohols with less than 2% non-hydrolysed acetate groups can readily crystallise to form strongly hydrogen bonding crystalline domains. These crystalline domains have a structure which is essentially the same as found in polyethylene. The reason for this may be attributed to the small size of the hydroxyl group. However, because of the hydrogen bonding, the melting point of highly hydrolysed polyvinyl alcohol is about 150°C higher than that of polyethylene. Polyols have been used as plasticisers, but efficient manufacture of plasticised polyvinyl alcohol with a high degree of hydrolysis has been difficult to achieve.

WO2017/046361 discloses a method for manufacture of a plasticised polyvinyl alcohol having a degree of hydrolysis of 98wt% or higher.

According to a first aspect of the present invention, a composite material comprises
a reaction product of polyvinyl alcohol and a fibrous cellulosic material;
wherein the amount of cellulosic material is in the range from about 0.1 wt% to about 50 wt% of the total weight of the composition.

The polyvinyl alcohol may be homopolymeric polyvinyl alcohol.

The composite material of this invention may be isotropic.

The composite material may be distinguished from a simple mixture or blend in which the polyvinyl alcohol and cellulosic ingredients are unchanged.

The cellulosic material may comprise fibres or non fibrous cellulose, for example, granular or powder forms of cellulose.

The cellulosic material may be selected from the group consisting of:
unbleached cellulose pulp, enzymic treated pulp, chemically treated pulp, micro- and nano-fibrillated cellulose, modified cellulose, including methyl cellulose, hydroxypropyl cellulose, ethyl cellulose and mixtures thereof.

The composite material may be made by chemical reaction between polyvinyl alcohol and the cellulosic material. The composite may exhibit advantageous properties not attainable using unreacted mixtures of the two ingredients.

The composite may be manufactured by controlled application of heat and pressure to a mixture of the polyvinyl alcohol and cellulosic material. For this purpose, the polyvinyl alcohol should be thermally processable.

The polyvinyl alcohol may be a polyvinyl alcohol composition comprising homopolymeric polyvinyl alcohol having a degree of hydrolysis of 70wt% to 98wt% or greater, and a molecular weight in the range of 20,000 to 140,000;
a plasticiser selected from the group consisting of: sugar alcohols, diols, triols, polyols and mixtures thereof; and
a stabilizer selected from the group consisting of: sodium stearate, potassium oleate, sodium benzoate, calcium stearate, stearic acid, dimethyl, propionic acid and mixtures thereof.

The degree of hydrolysis may be 80 wt% to 98 wt% or more, for example 83 wt% to 98 wt% or more, for example 88 wt% to 98 wt% or more.

The degree of hydrolysis may be 95-98%.

The polyvinyl alcohol composition may have a melt flow index (MFI) of 5 to 50, for example 10 to 35, for example 10 to 15g/10min.

The polyvinyl alcohol may have a molecular weight in the range 60,000 to 120,000, for example, 90,000 to 11,500, for example 95,000 to 11,000.

The polyvinyl alcohol composition is preferably stable at the temperature at which it is melted and extruded. Polyvinyl alcohol, not containing a plasticiser and stabiliser as disclosed herein, particularly the homopolymer having a high degree of hydrolysis, is liable to decompose at the temperatures required for melting and extrusion processing.

Advantageous polyvinyl alcohol fibres of this invention are capable of being processed on a commercial scale, for example using apparatus running at 4,500 m.min⁻¹

The stabilised polyvinyl alcohol polymers used in this invention may be manufactured using the method disclosed in WO2022/008516 and WO2022/008521, the disclosures of which are incorporated into this specification by reference for all purposes.

The polyvinyl alcohol composition may be made by a method comprising the steps of:
introducing into a mixing reactor a polyvinyl alcohol polymer comprising homopolymeric polyvinyl alcohol or a blend thereof having a degree of hydrolysis in the range of 88 wt% to 98 wt% or more;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid, a plasticiser and a reactive stabiliser to the chamber to form a reaction mixture;
wherein the plasticiser is selected from the group consisting of: sugar alcohols, diols, triols, polyols and mixtures thereof;
wherein the reactive stabiliser is selected from the group consisting of:
   sodium stearate, potassium oleate, sodium benzoate, calcium stearate, stearic acid, dimethyl propionic acid, and mixtures thereof;
   wherein the blending chamber comprises a plurality of heated regions arranged so that the mixture is subjected to a temperature profile whereby the temperature increases from the inlet to the outlet;
   a secondary outlet located between the reaction zone and primary outlet arranged to allow removal of processing aid from the chamber;
   reacting the processing agent, plasticiser and polymer in the reaction zone to form plasticised polymer; and
   allowing the plasticised polymer to pass from the primary outlet.

Use of a reactive mixing apparatus, typically an extruder in accordance with this invention allows the processing aid and plasticiser to be reacted with the polyvinyl alcohol or blend thereof, without decomposition of the polymer followed by removal of all or most of the processing aid from the secondary outlet to give plasticised polyvinyl alcohol or a blend thereof.

Use of a reactive stabiliser may result in an advantageous reduction in the extent of degradation during melt processing. This allows homopolymeric polyvinyl alcohol having a high degree of hydrolysis, for example 88 wt% or higher to be processed to form fibres or pellets from which fibres may be formed by extrusion.

The reactive stabiliser may be used in an amount of about 0.1 wt% to about 5 wt%, for example about 0.1 wt% to about 3 wt%, for example 0.1 wt% to about 1.5 wt%, for example from about 0.2 wt% to about 0.5 wt%, for example about 0.25 wt%.

The reactive stabilisers of this invention may decrease the extent of degradation of the polymer during processing. Homopolymeric polyvinyl alcohol has been difficult to process due to degradation at the high temperatures required. The liability of degradation has led to use of polyvinyl alcohol co-polymers with a consequent loss of engineering properties. This can be seen by UV spectral analysis of the amount of conjugation present in the polymer. Sodium benzoate has been found to be particularly effective.

Use of homopolymeric polyvinyl alcohol is particularly advantageous. Homopolymeric polyvinyl alcohol is manufactured by hydrolysis of homopolymeric polyvinyl acetate, the degree of hydrolysis being 93wt% or more in embodiments of this invention. Polyvinyl alcohol co-polymers made by hydrolysis of polyvinyl acetate co-polymers have inferior properties compared to homopolymeric polyvinyl alcohol. Homopolymeric polyvinyl alcohol may exhibit advantageous properties.

Polyvinyl alcohol polymers of this invention may have high tensile strength and flexibility.

The polyvinyl alcohol may be manufactured by hydrolysis of homopolymeric polyvinyl acetate, wherein the extent of hydrolysis is in the range from 70 wt% up to 98 wt%, for example 88 wt% to less than 98 wt%, for example 93 wt% to 97 wt%, for example 93 wt% to 95 wt%.

A blend of two or more polyvinyl alcohol polymers may be employed, for example a blend of two polyvinyl alcohol polymers with a relatively high molecular weight and a relatively low molecular weight respectively.

A blend of polyvinyl alcohols with the same molecular weight and different degrees of hydrolysis can be combined. Blending different polyvinyl alcohol grades together enables the properties of the resultant polymer to be enhanced, for example melt strength.

The blends of different molecular weight polymers employed are selected in accordance with the physical properties required in the finished product. This may require different molecular weight materials being used. Use of more than two different molecular weight polymers may be advantageous. The use of a single molecular weight polymer is not precluded.

Use of a blend may allow control of the viscosity of the polymer. Selection of a stabiliser in accordance with the present invention allows use of blends of a desired viscosity without a loss of other properties. Alternatively, use of a blend may permit use of polyvinyl alcohol with one or more stabilisers while maintaining viscosity or other properties to permit manufacture of pellets or films.

The processing aid is preferably water. Alternatively, the processing aid may comprise a mixture of water and one or more hydroxyl compound with a boiling point less than the boiling point or melting point of the plasticiser. Use of water is preferred for cost and environmental reasons.

The plasticiser may be selected from the group consisting of:
(a) sugar alcohols selected from the group consisting of: diglycerol, triglycerol, fructose, ribose, xylose, D-mannitol, triacetin, and mixtures thereof;
   polyols selected from the group consisting of: pentaerythritol, dipentaerythritol, and mixtures thereof;
(b) diols selected from the group consisting of: methyl pentanediol, 1,2-propanediol, 1,4-butanediol, 2-hydroxy-1,3-propanediol, 3-methyl-1,3-butanediol, 3,3-dimethyl-1,2-butanediol, and mixtures thereof;
(c) glycols selected from the group consisting of: polyethylene glycol 300, polyethylene glycol 400, alkoxylated polyethylene glycol, and mixtures thereof;
(d) caprolactam, tricyclic trimethylolpropane formal, rosin esters, euricamide, and mixtures thereof.

When a mixture of plasticisers is employed, a binary mixture may be preferred.

In a first embodiment, the following plasticisers may be used in combination:
dipentaerythritol, methyl pentanediol, triacetin, 2-hydroxy-1,3-propanediol, 3,3-dimethyl-1,2-butanediol, tricyclic trimethylolpropane formal, D-mannitol, triglycerol, and xylose.

Preferably a binary composition of the plasticisers of the first embodiment is employed.

In a second embodiment, the following plasticisers are used alone or in combination with each other or in combination with one or more plasticisers of the first embodiment: caprolactam, alkoxylated polyethylene glycol.

The total amount of plasticiser in the formulation may be from about 15 wt% to about 30 wt%.

A suitable grade of dipentaerythritol is Di-Penta-93 (manufactured by Perstorp Corp.).

The amount of the unbleached pulp fibres where present may be in the range of about 0.1wt% to about 50wt%, preferably about 10wt% to about 40wt%.

The amount of enzymatically modified cellulose nanofibres where present may be in the range of about 0.1 to about 30wt%, preferably about 5wt% to 20wt%.

The polyvinyl alcohol may be homopolymeric polyvinyl alcohol made by hydrolysis of homopolymeric polyvinyl acetate. Blends of two or more homopolymeric polyvinyl alcohols may be employed. The polyvinyl alcohol may have a degree of hydrolysis of 70% to 98% or more, preferably 80% to 98% or more, more preferably 83% to 98% or more.

Exemplary polyvinyl alcohol compositions which may be employed include:
(a) Fully hydrolysed with 98% degree of hydrolysis and molecular weight of 160,000;
(b) Lower degree of hydrolysis, 94% degree of hydrolysis with molecular weight of 55,000; and
(c) Blends of (a) and (b).

Composites of the present invention exhibit advantageous properties. Composites comprising cellulose, for example, unbleached cellulosic pulp fibres and polyvinyl alcohol, may be stronger and exhibit higher ductility in comparison to the corresponding pure polyvinyl alcohol. Brittleness may be reduced. Increasing the amount of unbleached cellulosic pulp fibres may increase the tensile strength and tensile modulus allowing achievement of unexpectedly high values.

Composites of this invention may be used for manufacture of thermally processable pellets which may be processed by extrusion o form, for example, film, fibre and rigid thermoformed products. Unreacted cellulose products are not thermally processable.

Composites containing unbleached cellulosic pulp fibres may change the inter and intra-molecular structure of the polyvinyl alcohol affecting both the crystallisation and physical behaviour of the composite. The addition of unbleached cellulosic pulp fibres may increase the glass transition temperature significantly. Without wishing to be bound by theory, this may indicate that the fibres restrict the segmental mobility of the polymer chains due to bonding interactions between the fibre and polymer chains. The enthalpies, melting and crystallisation temperatures may be increased, indicating an increase in the crystallinity of the polyvinyl alcohol. This may be due to the pulp fibres acting as a nucleating agent for the polyvinyl alcohol, increasing crystallinity and the size of crystallites.

The following table shows properties of the composite comprising polyvinyl alcohol (PVOH), with 0%, 10%, 20% and 30% unbleached cellulosic pulp fibres.

**Table 1**

| | PVOH | PVOH+ 10% pulp | PVOH+20% pulp | PVOH+30% pulp |
|---|---|---|---|---|
| Thermal stability (°C) | 262.5 | 240.0 | 230.0 | 222.0 |
| Glass transition (°C) | 35.4 | 37.6 | 41.7 | 50.0 |
| Melting point (°C) | 200.3 | 201.8 | 207.3 | 208.7 |
| Young Modulus (GPa) | 2.75 | 2.82 | 4.46 | 6.92 |
| Strain at yield %) | 4.0 | 3.3 | 2.8 | 1.6 |
| Strain at break (%) | <30 | 5.8 | 2.6 | 1.6 |
| Strength at break (MPa) | 62.52 | 55.23 | 72.91 | 91.47 |
| Charpy impact strength notched (kJ/m²) | 6.00 | 2.53 | 3.02 | 1.99 |

The following table shows a comparison between composites comprising polyvinyl alcohol (PVOH) with and without fibre, polylactic acid (PLA) with and without fibre and polypropylene (PP) with and without cellulose fibre.

**Table 2**

| Sample | Tensile Stress o'ₘ (MPa) | Elasticity Eₜ (MPa) | Strain at yield ε_{y} (%) | Strain at break ε_{b} (%) | Charpy Notched Impact Strength U_{N} (kJ/m²) |
|---|---|---|---|---|---|
| PVOH | 63 | 2700 | 4.0 | <30 | 6.0 |
| PVOH+30% fibre | 92 | 6900 | 1.6 | 1.6 | 2.0 |
| PLA | 68 | ^{∗}3500 | 2.5 | 5.6 | 1.6 |
| PLA+30% fibre | 78 | ^{∗}7500 | 1.7 | 1.7 | 2.4 |
| PP | 24 | ^{∗}1700 | 4.4 | >20 | 7.2 |
| PP+30% fibre ₁ | 40 | ^{∗}3900 | 4.5 | 4.5 | 4.1 |

| | | | | | |
|---|---|---|---|---|---|
| 1. Contains compatibilizer; ^{∗} Measured at a higher speed | | | | | |

The invention is further described by means of example but not in any limitative sense.

The polyvinyl alcohol used had the following properties:

| Property | Unit | Test Method | Polvinyl alcohol |
|---|---|---|---|
| Particle size | mm | ISO 2591 | 4-5 |
| Bulk density | kg/m³ | | 620-720 |
| Solid density | kg/m³ | | 1250-1350 |
| Melting temperature (peak) | °C | DSC | 209 |
| Melt flow rate (MFR) 210°C, 2.16 kg | g/10mins | ISO 1133 | 20-35 |

The composites of this invention may be used for manufacture of environmentally sustainable multi-functional packaging materials. These materials may provide advantageous thermal and mechanical properties, including barrier, anti-bacterial, antioxidant and UV-blocking properties. The composites may also find application in manufacture of engineering components, such as automotive and aerospace components.

In embodiments of the present invention the following polyvinyl alcohol homopolymer compositions may be employed.

**Polymer composition A**

| | |
|---|---|
| PVOH; degree of hydrolysis 98%; low viscosity | 35.97% |
| PVOH; degree of hydrolysis 89%; low viscosity | 35.97% |
| Trimethylolpropane | 14.37% |
| Sodium benzoate | 0.21% |
| Glycerol | 4.29% |
| Water | 9.20% |

**Polymer composition B**

| | |
|---|---|
| PVOH; degree of hydrolysis 99%; high viscosity | 7.193% |
| PVOH; degree of hydrolysis 98%; low viscosity | 64.737% |
| Trimethylolpropane | 14.37% |
| Sodium benzoate | 0.21 |
| Glycerol | 4.29% |
| Water | 9.20% |

**Polymer composition C**

| | |
|---|---|
| PVOH; degree of hydrolysis 98%; low viscosity | 35.87% |
| PVOH; degree of hydrolysis 89%; low viscosity | 35.87% |
| Di-pentaerythritol | 6.21% |
| Triacetin | 12.41% |
| Water | 9.39% |
| Sodium benzoate | 0.25% |

**Polymer composition D**

| | |
|---|---|
| PVOH; degree of hydrolysis 98%; low viscosity | 22.61% |
| PVOH; degree of hydrolysis 97%; medium viscosity | 52.76% |
| Di-pentaerythritol | 4.99% |
| Sodium benzoate | 0.25% |
| Triacetin | 10.00% |
| Water | 9.39% |

Percentages and other quantities referred to in this specification are by weight unless stated otherwise and are selected from any ranges quoted to total 100%.

The invention is further described by means of example but not in any limitative sense.

### Example 1

### Pulp conditioning

92% Dry cellulosic pulp (Nordic Paper UKP, unbleached soft wood kraft pulp from Swedish pine and spruce) was disintegrated by running it through a twin screw extruder at 50°C and 150 rpm. The extruder was open at the front and had screws without mixing segments. The resulting powder was a homogeneous pulp powder with a dry content of 95% and a degradation temperature of 250°C.

### Example 2

### Extrusion of polyvinyl alcohol-cellulose pulp composites

Mixtures containing a blend of polyvinyl alcohol, 98% degree of hydrolysis and molecular weight of 160,000 (50%) and polyvinyl alcohol with a 94% degree of hydrolysis and molecular weight of 55,000 (50%) and 0, 10, 20 and 30% of unbleached pulp fibres were prepared.

The components were added into the feed hoppers and processed by extrusion through a co-rotating twin-screw extruder Lab Tech LTE-20-48 with a screw diameter of 20mm and length/depth ratio of 48. The feeding rate was 50g/min. The official speed was 200 rpm. 12 heating zones were maintained at the following temperatures (°C): 90, 90, 70, 190, 190, 190, 200, 200, 210, 215, 220, 230, 230, 220, 200.

After leaving the die zone, the material flowed over a conveyor at 9.2 rpm and was cooled using fans.

### Example 3

### Testing of cellulose pulp/polyvinyl alcohol composites

Pellets obtained from the previous example were injection-moulded in a BOY 25 E VH to provide samples for tensile and impact tests. The injections were performed using the following temperature profile and a 20°C mould. Five heating zones were maintained at 215, 225, 225, 190 and 180°C respectively. The injection was set at 1200 bar and 10cm³/s.

Tensile testing was carried out using a procedure based on ISO 527.

Samples were conditioned at 50% humidity at 25°C for at least 72 hours prior to the test. The tensile modulus, strength and strain at break were measured using an MTS Flex Test 60 Controlled Hydraulic Actuator with an initial speed of 1mm/min that was increased to 50mm/min after 0.5% strain. Data was collected using MTS SERIES 793 Controlled Software at a rate of 500 Hz.

Impact testing procedure Charpy Notched Impact Tests were performed on a Zwick/Roell HIT 5P Impact Tester using a 5J Pendulum. This measured the toughness of the materials under impact load by the defamation required to fracture the specimen.

Dynamic Scanning Calorimetry (DSC) was based on ISO 11357-3:2018 Procedure.

DSC measurements were obtained on a Mettler-Toledo DSC822e Calorimeter. The tests were run under nitrogen atmosphere with a flow rate of 50mL/min⁻¹.

4 mg of each sample was placed in standard aluminium crucibles (40µL). The thermal programme was set to 98°C/min⁻¹.

Thermo Gravimetric Analysis (TGA) was based on ASTM E2550 Procedure.

TGA Measurements were obtained using a Mettler-Toledo 851. The tests were run under nitrogen atmosphere with a flow rate of 50mL/min⁻¹.

8mg of each sample were placed in ceramic cups. The thermal programme was set to 10°C/min⁻¹ from 30°C to 400°C. The results are shown in Tables 3, 4, 5, 6, 7, 8, 9 and Table 10.

### Example 4

### Manufacturer of Enzymatic Cellulose Nano Fibre (CNF) Reinforcing Agent

Refined pulp with a 4% pulp consistency was treated with an enzymatic cocktail obtained from Novonzyme in a sulphate buffer solution at pH7.2 at 50°C for 2 hours. Examples of the pre treated pulps with a fibre consistency of 2wt% were homogenised using a high pressure fluidiser Microfluidiser-110 EH (Microfluidics Corp., USA) through a 200/100 µM chamber at 1700 Bar.

The properties of the treated fibres were as follows:

| | |
|---|---|
| Length (µm) | 14.05 |
| Shear viscosity at 1s⁻¹ | 34.4 |
| Charge density (ueq/g) | 24 |
| Crystallinity (%) | 39 |
| Nanofraction (%) | 7.2 |
| Mw (Da) | 95884 |
| Zeta potential | -21.5 |
| Degree of polymerisation | 591 |

### Example 5

### Manufacture of composite

Polyvinyl alcohol pellets were dissolved in water at 70°C with stirring to obtain a 10% suspension. 2% cellulose nanofibres was heated to 70°C and mixed with the polyvinyl alcohol solution to obtain composites with 5%, 10% and 20% w/w of cellulose nanofibre with stirring at 500 rpm for 2 hours. The samples were sonicated using an ultra Turuz to eliminate fibre aggregations we had to provide a homogeneous dispersion. The samples were vacuum degassed after sonification to eliminate any bubbles.

The suspensions were transferred to square petri dishes and maintained at room temperature. Transparent films of 22.5cm dimension were obtained with an average thickness of 431 ± 51µ and a weight of approximately 23g.

The films were cut, dried and compounded in a HAAKE Mini Lab II Counter Rotating Twin Screw Extruder at 220°C and 100 rpm to obtain pellets of the composite.

Samples of the pellets were pressed at 220°C with 25kN force to a thickness of 0.4mm using a Servitec Polystat 200 T Laboratory Hot Press. The compounded samples were cut to obtain seven stripes with a dimension of 45 x 6 mm. The samples were reconditioned at 50% humidity and 23°C for at least 30 hours prior to testing. The tensile modulus, strength, strain at break and tensile E absorption was measured using an MTS Tensile Strength Machine with a speed of 3ml/min and an initial gap between the holders of 30mm.

Dynamic Scanning Calorimetry (DSC) based on ISO 11357-3:2018. Live DSC measurements were obtained on a Mettler-Toledo DSC 822e Calorimeter. The tests were run under a nitrogen atmosphere with a flow rate of 50 mL/min⁻¹. 4 mg of each sample was placed in a standard aluminium crucible (40 µL). The thermal program was set to 10°C (min⁻¹) as follows:-
a) heating stage from -10°C to 200°C
b) an isothermal stage at 200°C for 1 min
c) cooling from 200°C to -10°C
d) an isothermal stage at -10°C for 1 min
e) heating stage from -10°C to 400°C

Thermo-Gravimetric Analysis (TGA) was carried out according to ASTM E2550. TGA measurements were obtained in a Mettler-Toledo 851. The tests were run under a nitrogen atmosphere with a flow rate of 50mL min⁻¹. 8mg of each sample were placed in ceramic cups. The thermal programme was set for 10°C min⁻¹ from 30°C to 400°C.

The results are shown in Figures 1 to 7.

The compounding and sample preparation of cellulosic nanofibre/polyvinyl alcohol composites was carried out by two different methods.
1. Film casting after dispersion at 70°C.
2. Extrusion, film casting and hot pressing.

Method 2 resulted in composites with an improved tensile strength and tensile modulus but with a decreased elongation and toughness in comparison to composites from method 1. Addition of enzymatic cellulose nano fibres into the polyvinyl alcohol resulted in stronger and stiffer composites but strain and toughness were reduced in comparison to pure polyvinyl alcohol. A clear correlation between the cellulose nanofibre content and the tensile strength and modulus were observed during the compounding two reaching the highest values in composites with 20% of cellulose nanofibre. However, the best performance for film cast samples was for the composite with 5% cellulose nanofibre content. Addition of cellulose nano fibre increased the glass transition temperature which may indicate that the fibres restrict segmental mobility of the polymer chains employing both compounding methods. A slight increment in the enthalpies and melting and crystallisation temperatures indicated an increment in crystallinity of the polyvinyl alcohol and the role of cellulose nanofibre as a nucleic agent and 5% composites following both compounding methods. Compounding method 2 showed a decrease in the degree of crystallinity and the melting and crystallinity temperatures when the cellulose nano fibre content was greater than 5% indicating that cellulose nano fibre hinders crystallisation of the polyvinyl alcohol or causes degradation of the polymer chains. Compounding method 2 was done at 220°C, this being higher than the starting degradation temperature for the 20% composite.

The properties may be summarised in the following Tables:-

| Compounding Experiment 1 | PVOH | PVOH+5% CNF | PVOH+ 10% CNF | PVOH+20% CNF |
|---|---|---|---|---|
| Thermal stability (°C) | | | | |
| Glass Transition (°C) | 34.0 | 41.8 | 43.7 | 41.3 |
| Melting Point (°C) | 202.6 | 205.9 | 204.8 | 200.7 |
| Young Modulus (GPa) | 0.140 | 0.547 | 0.440 | 0.507 |
| Strain at break (%) | 363.4 | 147.44 | 63.78 | 10.03 |
| Strength at break (MPa) | 24.76 | 32.23 | 28.23 | 18.56 |
| TEA Index (kJ/kg) | 61.77 | 231.03 | 9.58 | 1.45 |

| Compounding Experiment 2 | PVOH | PVOH+5% CNF | PVOH+ 10% CNF | PVOH+20% CNF |
|---|---|---|---|---|
| Thermal stability (°C) | 260.5 | 240 | 226 | 202 |
| Glass Transition (°C) | 44.0 | 43.0 | 47.3 | 50.7 |
| Melting Point (°C) | 202.9 | 205.3 | 188.5 | 184.0 |
| Young Modulus (GPa) | 0.721 | 0.690 | 1.440 | 1.978 |
| Strain at break (%) | 34.2 | 8.7 | 3.7 | 3.0 |
| Strength at break (MPa) | 21.94 | 21.0 | 33.32 | 41.81 |
| TEA Index (kJ/kg) | 7.70 | 1.38 | 0.63 | 0.5 |

## Claims

1. A composite material comprising a reaction product of polyvinyl alcohol and a cellulose material, wherein the cellulose material is in an amount of 0.1 wt% to 50 wt% of the total weight of the composite material.

2. A composite material as claimed in claim 1, wherein the composite material is isotropic.

3. A composite material as claimed in claim 1 or 2, wherein the polyvinyl alcohol is homopolymer polyvinyl alcohol.

4. A composite material as claimed in any preceding claim, wherein the polyvinyl alcohol has a degree of hydrolysis of 70 wt% to 98 wt% or more.

5. A composite material as claimed in claim 4, wherein the polyvinyl alcohol has a degree of hydrolysis of 80 wt% to 98 wt% or more.

6. A composite material as claimed in claim 5, wherein the polyvinyl alcohol has a degree of hydrolysis of 83 wt% to 98 wt% or more.

7. A composite material as claimed in any preceding claim, comprising homopolymeric polyvinyl alcohol having a degree of hydrolysis of 70wt% to 98wt% or greater, and
a molecular weight in the range of 20,000 to 140,000;
a plasticiser selected from the group consisting of: sugar alcohols, diols, triols, polyols and mixtures thereof; and
a stabilizer selected from the group consisting of: sodium stearate, potassium oleate, sodium benzoate, calcium stearate, stearic acid, dimethyl, propionic acid and mixtures thereof.

8. A composite material as claimed in any preceding claim, wherein the polyvinyl alcohol composition has a melt flow index (MFI) in the range from 5 to 50, preferably 10 to 35, more preferably 10 to 15g/10min.

9. A composite material as claimed in any preceding claim, wherein the cellulose material is fibrous, granular or powdered cellulose.

10. A composite material as claimed in any preceding claim, wherein the cellulose material is fibrous cellulose.

11. A composite material as claimed in any preceding claim, wherein the cellulose
material is selected from the group consisting of:
unbleached cellulose pulp, enzymic treated pulp, chemically treated pulp, micro- and nano-fibrillated cellulose, modified cellulose, including methyl cellulose, hydroxypropyl cellulose, ethyl cellulose and mixtures thereof.

12. A composite material as claimed in any preceding claim, wherein the polyvinyl alcohol is a blend of two or more homopolymeric polyvinyl alcohols.

13. Thermally processable pellets consisting of a composite material as claimed in any preceding claim.

14. Thermally processable pellets comprising a composite material as claimed in any of claims 1 to 12, together with a filler or other additive.

15. A method of manufacture of a composite material as claimed in any of claims 1 to 12, comprising the step of extruding a mixture of polyvinyl alcohol and fibrous cellulose material.
